(19) Europäisches Patentamt
European Patent Office
Office européen des brevets

(11) EP 3 264 777 A1

## (12) EUROPEAN PATENT APPLICATION

(43) Date of publication:
03.01.2018 Bulletin 2018/01

(21) Application number: 16177528.3

(22) Date of filing: 01.07.2016

(51) Int Cl.:
H04N 21/254 (2011.01)       H04N 21/44 (2011.01)
H04N 21/442 (2011.01)       H04N 21/8358 (2011.01)
H04N 21/845 (2011.01)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(71) Applicant: Nagravision SA
1033 Cheseaux-sur-Lausanne (CH)

(72) Inventors:
• STUDER, Emeric
1033 Cheseaux-sur-Lausanne (CH)
• SARDA, Pierre
1033 Cheseaux-sur-Lausanne (CH)

(74) Representative: Korenberg, Alexander Tal et al
Kilburn & Strode LLP
Lacon London
84 Theobalds Road
London WC1X 8NL (GB)

## (54) TRAITOR TRACING

(57) The present disclosure provides a system and method of traitor tracing by identifying an original receiver of a media stream that has been re-transmitted comprises detecting sets of content items, such as adverts, that are embedded in the media stream. The sets of content items can then be used to determine receivers of the media streams comprising the detected sets of content items.

```
┌────────────────────────────────────────────────────┐
│       Receive re-transmitted media stream          │──202
└────────────────────────────────────────────────────┘
                         │
┌────────────────────────────────────────────────────┐
│  Detect content items in re-transmitted media stream│──204
└────────────────────────────────────────────────────┘
                         │
┌────────────────────────────────────────────────────┐
│ Access information associating content items with   │──206
│              original recipients                    │
└────────────────────────────────────────────────────┘
                         │
┌────────────────────────────────────────────────────┐
│   Determining original receiver(s) of the media     │──208
│                    stream                           │
└────────────────────────────────────────────────────┘
                         │
              ◇ Number of identified        ──210
     No ──────   receiver(s) below
              ◇ predetermined size?
                         │ Yes
                     ( End )
```

FIG. 3

# Description

FIELD

The present disclosure relates to a system and method of identifying an original receiver of a media stream, for example, when the media stream has been re-transmitted by an original receiver without authorisation.

BACKGROUND

Audio and/or video content can be transmitted e.g. multicast or webcast etc., from a content provider in a media stream to receivers that receive the media stream. For example, a radio program or television program may be multicast in a media stream to a receiver. Typically, the receivers are authorised to receive the media stream. However, some receivers re-transmit the media stream when they are not authorised to do so, leading to a pirate copy of the media stream being distributed. The pirate version of the media stream can then be received by unauthorised receivers. The pirate media stream is generally re-transmitted in real time, or with a short delay from when the media stream was originally received by the authorised receiver.

Generally, content providers seek to prevent unauthorised receivers from receiving the pirate media stream. This can be achieved by traitor tracing identifying the original receiver of the media stream, and then preventing that receiver from receiving further media streams.

BRIEF DESCRIPTION OF THE DRAWINGS

Embodiments are now described with reference to the drawings in which:

Figure 1A illustrates an environment in which re-transmission of a unicast media stream is taking place;
Figure 1B illustrates an alternative environment in which re-transmission of a broadcast media stream is taking place;
Figure 2A illustrates a system for identifying re-transmitted media streams;
Figure 2B illustrates a database used by the system of Figure 2A;
Figure 2C illustrates a further database;
Figure 3 illustrates a flowchart of a method of identifying an original receiver of a media stream;
Figure 4 illustrates a schematic diagram of audiences of content items;
Figure 5 illustrates a flowchart of a method of assigning sets of content items;
Figure 6 illustrates a schematic diagram of sets of content items;
Figure 7 illustrates a flowchart of a method of assigning sets of content items; and
Figure 8 illustrates a block diagram of one implementation of a computing device.

DETAILED DESCRIPTION OF THE DRAWINGS

In overview, a system for and method of traitor tracing is disclosed. An original receiver of a media stream that has been re-transmitted is identified by detecting sets of content items, such as adverts, that are embedded in the media stream. The sets of content items are then used to determine receivers of the media streams comprising the detected sets of content items. The media streams may comprise one or more items of main content, for example a television series, a movie, a sporting event etc., and the content items are typically inserted within the main content, for example during advertisement breaks.

In some aspects of the disclosure a method comprises a method of identifying an original receiver of a media stream. The media stream was transmitted by a content provider to the original receiver. The media stream may have been transmitted such that a content provider provides a different media stream directly to each receiver over a corresponding connection or communication channel. Alternatively, the media stream may be transmitted by broadcast such that a content provider provides the same media stream to different receivers. The method comprises receiving a re-transmitted media stream. The re-transmitted media stream is a re-transmission of the media stream originally transmitted by the content provider. The method further comprises detecting a set of content items embedded in the received media stream. Information associating content items with original receivers of a media stream containing the content items is accessed and used to determine an original receiver of the media stream comprising the detected set of content items.

By identifying media streams based on inserted content items rather than, for example, modifying the main content of the media stream (in which the content items are inserted), a simple method of traitor tracing is provided that uses less processing power compared to a traitor tracing method where a unique identifier for each receiver is embedded into the media stream. For example, when a watermark is added to a video component of the media stream with a unique identifier corresponding to each receiver, this requires the content of the media stream to be modified, either before transmission by a content provider, or by a receiving device. This modification of the media stream requires significant processing power, especially if there are thousands of receivers that need to be identified. Further, simple watermarking can be removed on re-transmission by cropping the video frames in the media stream. Removal of the or all content items to remove identifying information from the media stream is much more difficult for a traitor if the media stream is re-transmitted in real time or near real time.

Thus, the disclosed method may be more efficient (for example in that both inserting and detecting content items is relatively simple) but also more effective (for example in that it does not impact the video quality of what the user wants to watch).

In some embodiments, each target group of receivers is predetermined based on the demographic of the receivers. In some embodiments, additionally or alternatively, sets of content items are predetermined and assigned to predetermined subgroups of authorised receivers before being transmitted to the authorised receivers. Assigning sets of content items to a subgroup of authorised receivers (effectively a target audience of the set), rather than content item by content item independently enables the subgroups and content item sets to be generated by the content provider with identifying retransmitters in mind. Thus, by controlling the distribution of content items across the subgroups, the pirate transmitter can be identified more quickly compared to using a target group of receivers independently for each content item, for example, based on the demographic of the receivers, where demographic information means that some target audiences contain more intended receivers than other target audiences.

In some embodiments, media items are assigned using a tree algorithm. A group of receivers comprising the original receiver of the re-transmitted media stream is split into subgroups and a different content item is assigned to each subgroup for transmission in a first time slot of a media stream. Then, once or repeatedly, each subgroup is split into further subgroups and a different content item is assigned to each further subgroup for transmission in a subsequent time slot. The media streams are transmitted with content items in the time slots according to the corresponding subgroup. Transmission may take place in parallel to the assignment of content items, that is the media streams are transmitted continuously and each time slot filled with content items in time for transmission with the assignment for the subsequent time slot occurring once the previous time slot has passed. Alternatively, content items may be assigned to time slots in advance so that a set of content items assigned to time slots is known in advance, possibly in advance of the start of transmission of the media streams, for example, in advance of an event to which the main content of the media stream relates. In some embodiments, the media streams are transmitted with metadata instead of each content item itself. The metadata may comprise an identification of each content item and the position (or time slot) of the content item to cause the receiver to access to the content items (eg. through a network connection, or to a content already pushed and stored to the local PVR) and insert the content items into the media streams to the appropriate time slots.

In any of the embodiments, naturally, demographic information can also be taken into account in assigning content items to subgroups or target audiences.

Further aspects of the disclosure relate to a system and non-transitory computer readable storage media for carrying out the method described above.

Some specific embodiments are now described by way of illustration with reference to the accompanying drawings in which like reference numerals refer to like features.

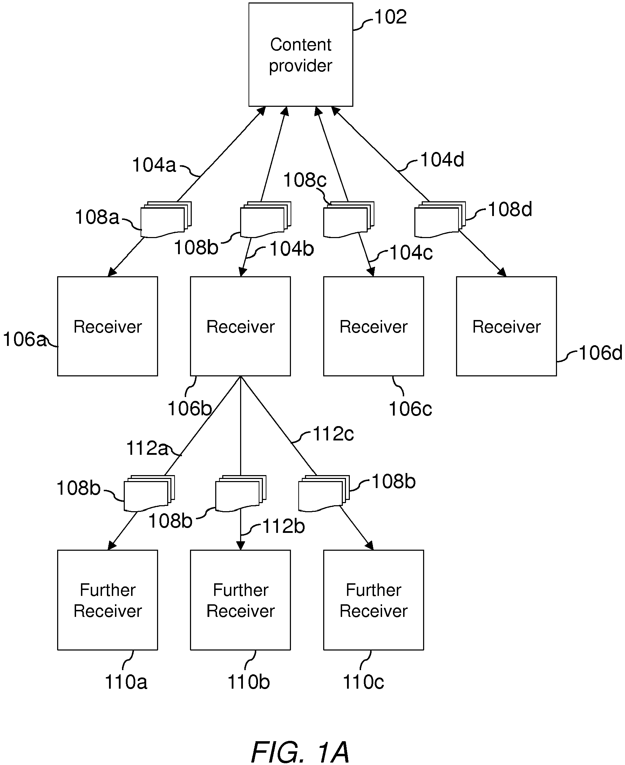

With reference to Figure 1A, a content provider 102 transmits a media stream 104a, 104b, 104c, 104d to each of a plurality of authorised receivers 106a, 106b, 106c, 106d. The media stream is transmitted such that a content provider provides a different media stream 104a-d directly to each receiver 106a-d. The content provider 102 transmits the media streams 104a-d to the receivers via respective communication channels. For example, each media stream may be transmitted to its receiver via an internet protocol connection such as TCP/IP. The receivers may be arranged to output the media stream to a screen and/or speakers for consumption by a user of the authorised receiver. The authorised receivers 106a-d are authorised by the content provider to receive their respective media stream. The content provider 102 may authorise the receiver using a logged-in user account, a pre-authorised device issued by the content provider, and/or a smart card for the receiver (e.g. a set-top box smart card). Accordingly, the authorised receivers 106a-d are a defined set of devices that are at least temporarily registered with the content provider 102 to receive content. Content may be delivered on demand, i.e on-demand content, or may be provided on a scheduled basis, i.e linear content.

Each media stream 104a-d comprises the same main content and a different set of content items 108a, 108b, 108c, 108d relative to each other. Each set of content items 108a-d comprises a plurality of content items. Each content item may be an advertisement, a movie trailer, a station identifier such as a TV ident, a news flash, a weather update, etc. The content items may be interleaved in main content delivered with the media streams 104a-d. The main content may be a radio show, a television programme, a sports match, a movie, etc.

The content items 108a-d may be allocated to time slots in the media streams 104a-d in breaks between the main content of the media stream. Each content item may be of equal length with the benefit that the content items can be easily interchanged between time slots.

In some embodiments, the content provider 102 broadcasts a media stream to receivers instead of respective point to point communication channels described above with reference to Figure 1A. In this setting, as each receiver receives the same media stream, the individualised content items cannot be embedded before transmission of the media stream because the same media stream is received by all receivers. Instead the content items are embedded by the receiver before the media stream is output, e.g. decoded and displayed, as described below.

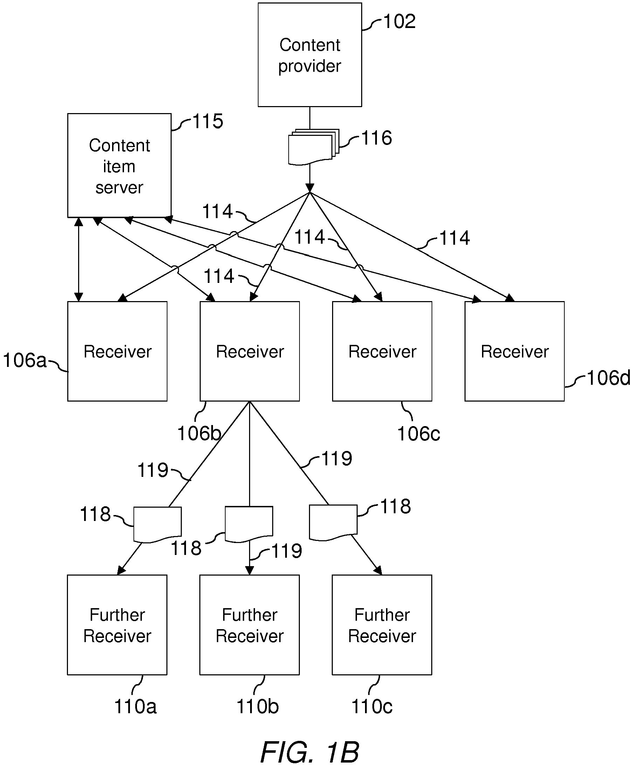

With reference to Figure 1B, the content provider 102 broadcasts a media stream 114, and it is received by a plurality of authorised receivers 106a, 106b, 106c, 106d, each having a receiver identifier, for example a unique ID of the receiver, or a unique ID of a peripheral such as a smart card associated with the receiver, or a logged-in subscriber ID. The media stream 114 comprises the main content and metadata 116 indicating different sets of content items and their time slots for each receiver 106a-d. For example, the metadata may comprise a list of individual receiver identifiers and their corresponding set of content items, or the metadata may define a set of content items for a range of receiver identifiers, e.g. receiver identifier numbers 1 to 10,000, 10,001 to 20,000 etc. Each receiver 106a-d is arranged to read the metadata and insert the set of content items corresponding to its receiver identifier into a media stream for output. For example, receiver 106b is instructed by the metadata 116 to output the media stream with a set of content items 118.

A content item server 115 stores a collection of content items that can be inserted into media streams for retrieval by the receivers 106a-d. The receivers 106a-d may comprise a memory for storing content items retrieved from the content item server 115. Alternatively or additionally, the receivers 106a-d may retrieve a content item indicated in the metadata from the content item server 115 at the time of inserting into a media stream.

In some embodiments, the metadata indicates a time slot for a content item but does not specify the content item to be inserted. Instead, the receivers 106a-d request a content item for each time slot by transmitting the receiver identifier to the content item server 115 and a content item is selected and transmitted by the content item server 115 based on the receiver identifier.

In some embodiments, the receivers 106a-d comprise an appropriate set of instructions which uses the receivers unique ID and the metadata to select the appropriate content item to be inserted inside the content and at which time slot.

It will be understood that metadata can be inserted in the respective media streams instead of the set of content items in embodiments where the content provider 102 transmits the media streams as described with reference to Figure 1A. The receivers 106a-d may read the metadata and output the media stream with the indicated set of content items embedded. Since individualised respective media streams are transmitted, the metadata may be different for each receiver. Of course, the metadata may be the same for all receivers but indicate different sets of content items for each receiver, e.g. identified by an identifier of the receiver or subscriber, as described with reference to Figure 1B.

In the embodiments of both Figures 1A and 1B, one of the authorised original receivers 106b, referred to as the re-transmitting receiver 106b below re-transmits its media stream 104b, 114 to further receivers 110a, 110b, 110c in re-transmitted media streams 112a, 112b, 112c, 119, i.e. pirate transmissions of the media stream. The re-transmitting receiver 106b is not authorised by the content provider 102 to re-transmit the media stream 104b, and the further receivers may not be authorised by the content provider to receive the main content in the re-transmitted media stream 112a-c. Accordingly, the further receivers 110a-c are an open set of devices unknown to the content provider 102. It will be understood that the media stream 104b may not be received directly from the re-transmitting receiver 106b or any one of the authorised receivers. Instead, the media stream 104b may be received from a source that is sent a media stream from one of the authorised receivers, and it will be understood that the principles of the present disclosure equally apply to this situation.

The re-transmitted media streams 112a-c, 119 may be in a different data format to the original media stream 104b received by the re-transmitting receiver. For example, the re-transmitted media stream may have a lower data rate or use different audio or video codecs than the original media stream received by the re-transmitting receiver. The re-transmitted media streams 112a-c, 119 may even be modified, e.g. a video portion may be cropped, to circumvent any watermarking applied to the media stream 104b, without affecting the principle of the present disclosure.

In the setting of Figure 1A, the re-transmitted media streams 112a-c each comprise the same set of content items 108b as received by the re-transmitting receiver 106b because the re-transmitted media streams 112a-c are identical to or derived from the media stream 104b received by the re-transmitting receiver 106b. Therefore, as each of the media streams 104a-d transmitted to the authorised receivers comprise different sets of content items 108a-d, traitor tracing can be carried out to identify the media stream 104b that was re-transmitted by inspecting the set of content items in any of the re-transmitted media streams 112a-c. The re-transmitting receiver 106b may then be identified as the original receiver of the media stream 104b that was re-transmitted. It will be understood that in practice there may be many more original receivers 106a-d, for example, thousands of original receivers and that depending on the number of content items analysed, individual receivers or only a subgroup of original receivers can be identified, as discussed further below.

In the setting of Figure 1B, the re-transmitted media streams 119 each comprise the same set of content items 118 as indicated in the metadata 116 for receiver 106b. Therefore, as each of the media streams output by the authorised receivers comprise different sets of content items as indicated by the metadata 116, traitor tracing can be carried out to identify the re-transmitted receiver 106b by inspecting the set of content items in any of the re-transmitted media streams 119, as described above. In both Figures 1A and 1B, one of the further receivers 110a, referred to as the identifying receiver 110a below, is arranged to identify the media stream that is being re-transmitted in order to determine the re-transmitting receiver.

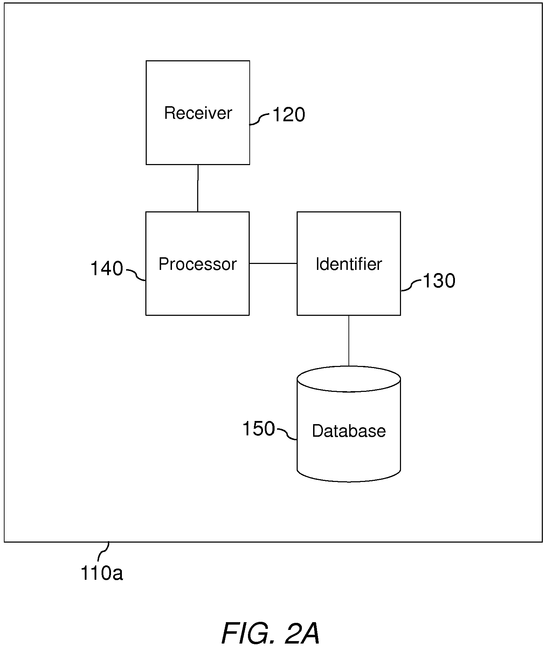

With reference to Figure 2A, the identifying receiver 110a comprises a receiver module 120, an identifying module 130, a processor 140 and a database 150. It will be understood that these modules can be provided in hardware or software, or a combination thereof, and can be provided in a single device or a distributed system, as described in detail below.

The receiver module 130 is configured to receive the re-transmitted media stream 112a, the identifying module 130 is configure to analyse the received media stream to identify it and hence its original receiver and accesses database 150 to do so. The processor 140 is configured to coordinate between the modules and to process the result of identification, e.g. to raise a traitor alarm such as by generating an email alert or etc. so that the content provider 102, or other entity, can take action. Further, the processor 140 is configured to cause the receiver module 120 to access and receive different media streams, for example for suspected websites or internet links so that the identifying receiver 110a can scan for pirate media streams.

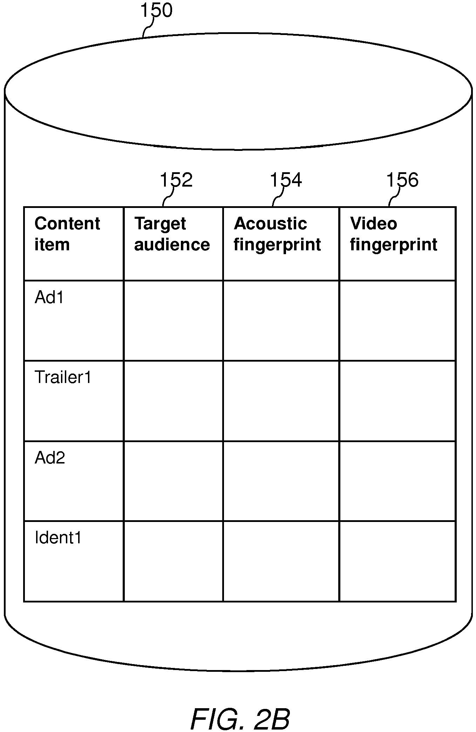

In some embodiments, the database 150 comprises predetermined content items. With reference to Figure 2B, the database 150 comprises a content item record for each content item. Each content item record comprises a target audience 152, and an acoustic fingerprint 154 and/or a video fingerprint 156. In some embodiments, the content item records do not include an acoustic fingerprint 154 and/or a video fingerprint 156 and may include the content items or excerpts of the content items instead. The target audience 152 includes a set of intended receivers for the content item in question. In some embodiments, the target audience 152 for each content item is predetermined by the content provider 102, for example based on demographic information. In some embodiments, the identifying receiver 110a is arranged to determine intended receivers, i.e. the target audience 152, for example, based on previously received content items and associated target audiences. The receivers in the target audience may be identified using a MAC address, an IP address, a logged in user account, or any combination of these.

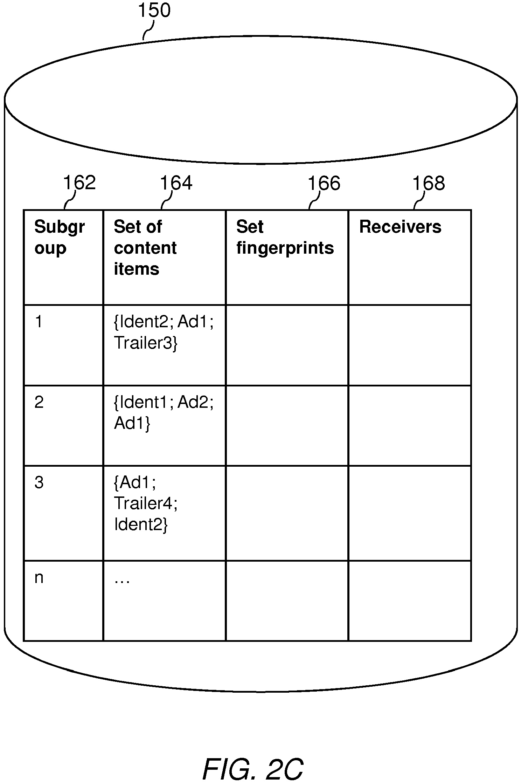

Alternatively or additionally, in some embodiments, the database 150 comprises subgroup records. With reference to Figure 2C, database 150 comprises a plurality of subgroup records 162, each subgroup record having a set of content items 164, a set fingerprint 166, e.g. an acoustic fingerprint and/or a video fingerprint for the set of content items, and a set of receivers 168 in the subgroup. The receivers in the target audience may be identified using a MAC address, an IP address, a user account, or any combination of these.

The target audience 152 and the sets of receivers 168 may comprise receivers that receive the same main content, for example, a group of receivers that are subscribed to receive a sports event as the main content.

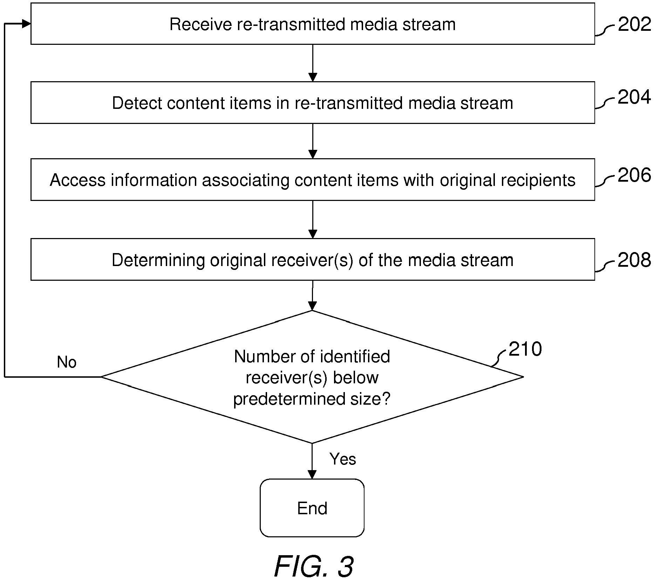

A method implemented by the identifying receiver 110a to identify the media stream that was re-transmitted is now described with reference to Figure 3. At step 202, the identifying receiver 110a receives a re-transmitted media stream 112a from the re-transmitting receiver 106b. At step 204, content items embedded in the received re-transmitted media stream 112a are detected. The detection of content items may be carried out using automatic content recognition as is known in the art to recognise and identify content items present in the media stream from the database 150 of content items. For example, an acoustic fingerprint of a portion of the media stream may be generated and compared against the acoustic fingerprints 154 of the content items in the database 150 in order to determine a matching content item. The content items detected in the media stream form the detected set of content items in the media stream. For example, one content item may be detected and added to the detected set of content items each time step 204 is carried out.

At step 206, the identifying receiver 110a accesses information from the database 150 of content items to determine, for each content item in the detected set of content items, the associated target audience 152. Accordingly, a set of target of audiences corresponding to the detected set of content items is determined.

At step 208, the one or more receivers that have received all content items in the set, that is the information of all respective target audiences, are determined using the target audience 152 information in the database 150. The one or more receivers that are common to the whole set of target audiences is the original receiver(s) of the media stream that was re-transmitted.

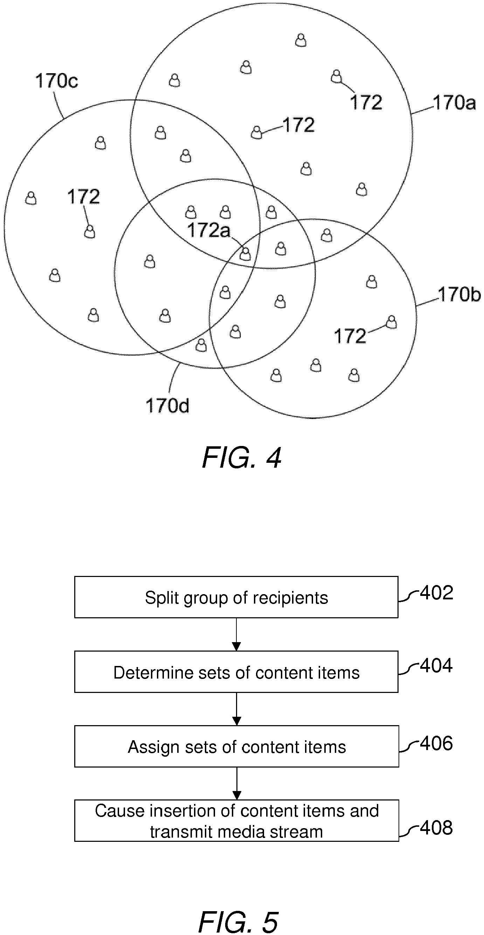

Figure 4 illustrates a plurality of target audiences 170a, 170b, 170c, 170d, each target audience having a plurality of intended receivers 172, 172a, typically corresponding to identified receivers of the target audience. Each receiver 172, 172a is included in one or more target audiences 170a-d, and hence some of the receivers are common to more than one target audience. In the example of Figure 4, if the plurality of target audiences 170a-d are determined as the set of target audiences at step 206, then receiver 172a is determined at step 208 to be common to the whole set of target audiences. This is because receiver 172a is an intended receiver of each of the target audiences 170a-d.

Returning to Figure 3, at step 210, if the number of original receivers identified in step 208 is below a predetermined size, then the process ends. On the other hand, if the number of original receivers identified in step 208 is greater than a predetermined size, then the process loops back to step 202 to continue receiving the media stream to detect further content items. As the number of content items in the detected set of content items increases, the set of target of audience correspondingly increases, and reduces the number of receivers that are common to the whole set of target audiences. In other words, by increasing the size of the set of content items, fewer receivers would be determined in step 208.

In some embodiments, at step 204, sets of content items embedded in the received re-transmitted media stream 112a are detected using the database 150 of subgroups. For example, an acoustic fingerprint of a portion of the media stream may be generated and compared against the set fingerprints 166 of the content items in the database 160 in order to determine a matching set of content items 164. In some embodiments, each content item in the set is individually detected, and the order in which the content items appear in the media stream is used to determine the matching set of content items. Then, at steps 206 and 208, the identifying receiver 110a accesses information from the database 160 of subgroups to determine the subgroup 162 associated with the detected set of content items in the media stream.

In some embodiments, each target audience 152 is predetermined based on the demographic of the receivers. In other embodiments, each target audience is a subgroup of the authorised receivers, where the subgroups are generated by the content provider with identifying re-transmitters in mind. Of course, it will be understood that these embodiments may take account of demographic information to assign content items, as well.

A method implemented in some embodiments by the content provider 102 to generate subgroups and their corresponding content items is now described with reference to Figure 5. In some embodiments, the method may be implemented by a separate system that embeds content items into media streams. In either case, the content provider 102 or other system may be implemented using one or more computing devices as described below.

At step 402, the content provider 102 splits the authorised receivers into different subgroups each with substantially equal number of receivers. In other embodiments, the number of receivers in each subgroup may differ. By controlling the distribution of the size of the subgroups, the pirate transmitter can be identified more quickly compared to using target audiences based solely on the demographic of the receivers, where demographic information means that some target audiences contain more intended receivers than other target audiences. For example, if the content provider 102 suspects an authorised receiver to be a traitor, the content provider 102 can determine a small size subgroup comprising the suspected traitor. This can reduce the number of iterations of the method described with reference to Figure 3 to reach the predetermined number of receivers at step 210. If the subgroups are substantially equal sizes and the receivers are randomly divided in the subgroups, then each subgroup has approximately the same probability of comprising the traitor. At step 404, a set of content items is determined for each subgroup, such that each set of content items is different. Then at step 406, a set of content items is assigned to each subgroup. A master media stream for each subgroup may comprise the same main content, and the assigned content item may be inserted into the master media stream to form the media streams for the receivers in the subgroup.

In embodiments where respective media streams 104a-d are transmitted for the receivers, at step 408, the set of content items are inserted into media streams corresponding to each subgroup. Alternatively, metadata indicating the set of content items are inserted into media streams corresponding to each subgroup. The media streams comprising the set of content items or the metadata indicating the set of content items are transmitted to each subgroup of receivers. Once the media streams are transmitted to the authorised receivers at step 408, the process described above with reference to Figure 3 can be carried out by the identifying receiver 110a to identify which subgroup of original receivers received the media stream that was re-transmitted.

In embodiments where the media stream 114 is broadcast, at step 408, the media stream is transmitted with metadata 116 defining the sets of content items determined for each subgroup. The receivers then read the metadata and determines the timeslots and available content items to insert. Then by using an appropriate set of instructions and its unique identifier insert at the appropriate timeslots the set of content items corresponding to their receiver identifier into the media stream to be output.

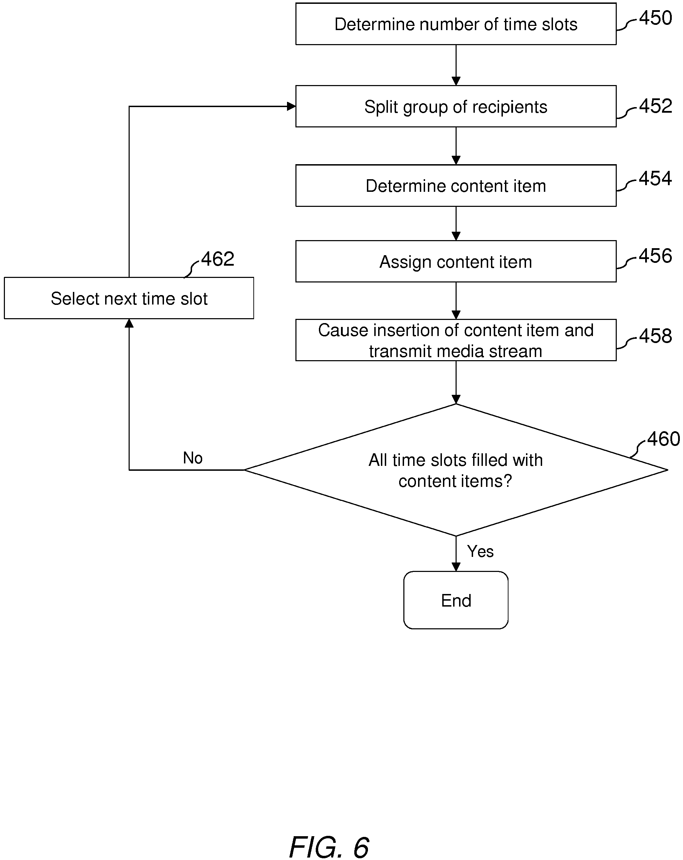

Figure 6 illustrates a specific method of implementing, in some embodiments, the method described above with reference to Figure 5. At step 450, the content provider determines the number of time slots in the media stream, e.g. in the advertisement breaks between the main content, that require content items to be assigned, and selects an initial time slot to be filled. The number of time slots may be determined as a minimum number of time slots to identify a subgroup based on the desired size of the subgroup, the number of available content items and the number of authorised receivers, as discussed below in greater detail.

At step 452, the content provider splits the authorised receivers into different subgroups each with substantially equal number of receivers. In other embodiments, the number of receivers in each subgroup may differ. At step 454, a different content item is determined for each subgroup. Then at step 456, the content item determined for each subgroup is assigned to its corresponding subgroup.

In embodiments where respective media streams 104a-d are transmitted for the receivers, at step 458, a media stream is transmitted to each subgroup. The media streams comprise the content items or metadata indicating the content item, assigned to the subgroup to which it is transmitted, and the content item is embedded in the time slot to be filled.

In embodiments where the media stream 114 is broadcast, at step 458, the media stream is transmitted with metadata 116 defining the content items determined for each subgroup. The receivers then read the metadata and insert the content item corresponding to their receiver identifier into the media stream to be output.

At step 460, the content provider checks whether all the time slots determined at step 450 have been filled. If the time slots have not all been filled, then at step 462, the next time slot to be filled is selected, then the process loops back to step 452. Following the check of step 460, if all the time slots determined at step 450 have been filled, then the process ends. While the embodiment described assigns content items to time slots and transmits media streams as time slots are filled, it will be appreciated that in some embodiments, some or all of the time slots are filled in advance of transmitting the media streams.

Once the media streams are transmitted to the authorised receivers at step 458, the process of Figure 3 can be carried out by the identifying receiver 110a to identify which subgroup of original receivers received the media stream that was re-transmitted.

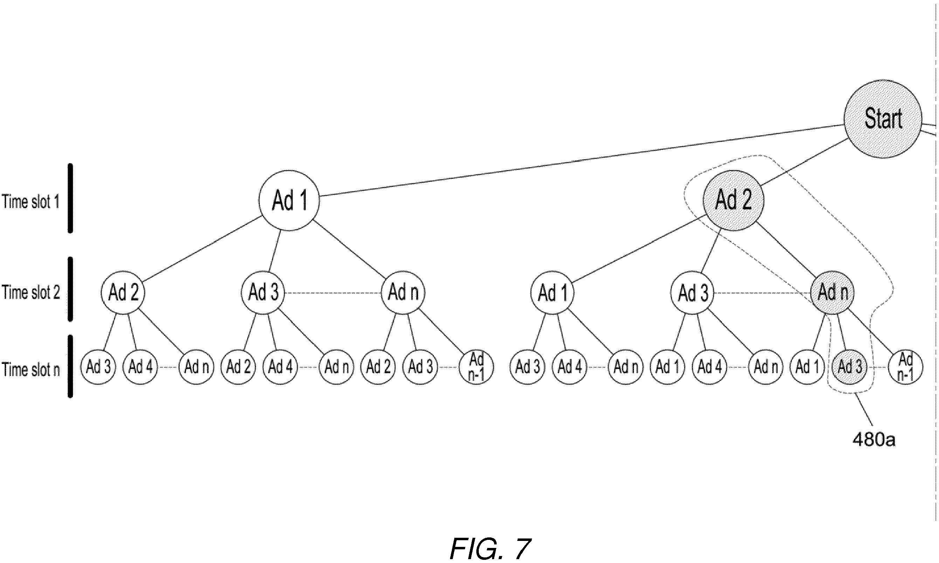

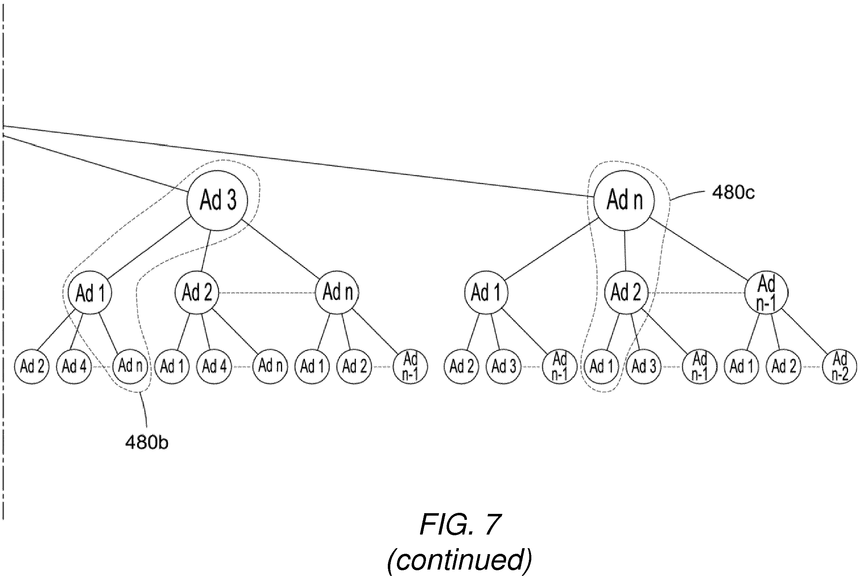

Figure 7 illustrates how sets of content items are assigned according to the method as described above. In each set of content items 480a, 480b, 480c, a content item is allocated in each time slot 1 to n. A group of receivers comprising the original receiver of the re-transmitted media stream is split into subgroups and a different content item is assigned to each subgroup for transmission in a first time slot to of a media stream. Then, once or repeatedly, each subgroup is split into further subgroups and a different content item is assigned to each further subgroup for transmission in a subsequent time slot. The media streams are transmitted with content items in the time slots according to the corresponding subgroup.

The number of different sets of content items available for the determination at step 404, u, depends on the number of different content items, n, the number of time slots for content items in the media stream, $k$, whether a content item can be repeated in a set, and whether the order of the content items in the set are taken into account in the detecting step at 204.

The total number of sets of content items that are available is given by:

$$u = n^k$$

Of this total number of sets, there are sets that comprise repeated content items. The different combinations of sets of content items that are available without repeated content items is given by:

$$u = \frac{n!}{k!\,(n-k)!}$$

If the order of the content items in the set are taken into account allowing repeated content items, the different combinations of sets of content items that are available is given by:

$$u = \frac{(n+k-1)!}{k!\,(n-1)!}$$

If the order of the content items in the set are taken into account without repeated content items in the set, the different permutations of sets of content items that are available is given by:

$$u = \frac{n!}{(n-k)!}$$

In a particular example, there are 1 million subgroups, for example, 1 million subgroups or authorised receivers, each subgroup containing a single receiver. Each subgroup requires a different set of content items, and there are 20 content items in the database of content items, i.e. $u = 1,000,000$ and $n = 20$. If the order of the content items is taken into account, the minimum number of time slots, $k$, required to have a different set of content items for each subgroup is 5, i.e. $k \geq 5$, irrespective of whether content items can be repeated or not. In this example, the content provider 102 can uniquely identify a traitor with at least five time slots. The content provider 102 can define the number of content items, i.e which do not have to be in consecutive time slots, required to uniquely identify an individual traitor, depending on the total number of authorised receivers and the number of available content items.

By using the process described with reference to Figures 5 or 6 to generate subgroups, the size of the subgroups can be controlled by the content provider 102. As the desired size of the subgroup can be generated in accordance with either Figure 5 or 6 to be smaller than the predetermined number of identified original receivers, in the process of Figure 2, the check at step 210 whether the number of identified original receivers is below a predetermined size, may not be required because each subgroup would comprise fewer receivers than the predetermined number of receivers to which the identification is to be limited.

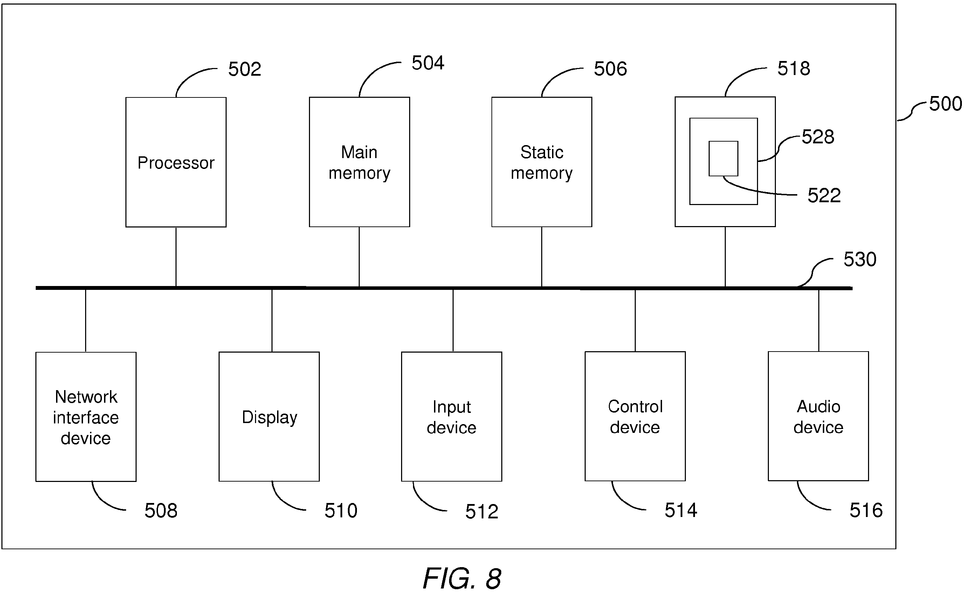

Figure 8 illustrates a block diagram of one implementation of a computing device 500 within which a set of instructions, for causing the computing device to perform any one or more of the methodologies discussed herein, may be executed. In alternative implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a web appliance, a server, a network router, switch or bridge, or any machine capable of executing a set of instructions (sequential or otherwise) that specify actions to be taken by that machine. Further, while only a single computing device is illustrated, the term "computing device" shall also be taken to include any collection of machines (e.g., computers) that individually or jointly execute a set (or multiple sets) of instructions to perform any one or more of the methodologies discussed herein.

The example computing device 500 includes a processing device 502, a main memory 504 (e.g., read-only memory (ROM), flash memory, dynamic random access memory (DRAM) such as synchronous DRAM (SDRAM) or Rambus DRAM (RDRAM), etc.), a static memory 506 (e.g., flash memory, static random access memory (SRAM), etc.), and a secondary memory (e.g., a data storage device 518), which communicate with each other via a bus 530.

Processing device 502 represents one or more general-purpose processors such as a microprocessor, central processing unit, or the like. More particularly, the processing device 502 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processing device 502 may also be one or more special-purpose processing devices such as an application specific integrated circuit (ASIC), a field programmable gate array (FPGA), a digital signal processor (DSP), network processor, or the like. Processing device 502 is configured to execute the processing logic (instructions 522) for performing the operations and steps discussed herein.

The computing device 500 may further include a network interface device 508. The computing device 500 also may include a video display unit 510 (e.g., a liquid crystal display (LCD) or a cathode ray tube (CRT)), an alphanumeric input device 512 (e.g., a keyboard or touchscreen), a control device 514 (e.g., a mouse or touchscreen), and an audio device 516 (e.g., a speaker).

The data storage device 518 may include one or more machine-readable storage media (or more specifically one or more non-transitory computer-readable storage media) 528 on which is stored one or more sets of instructions 522 embodying any one or more of the methodologies or functions described herein. The instructions 522 may also reside, completely or at least partially, within the main memory 504 and/or within the processing device 502 during execution thereof by the computer system 500, the main memory 504 and the processing device 502 also constituting computer-readable storage media.

The various methods described above may be implemented by a computer program. The computer program may include computer code arranged to instruct a computer to perform the functions of one or more of the various methods described above. The computer program and/or the code for performing such methods may be provided to an apparatus, such as a computer, on one or more computer readable media or, more generally, a computer program product. The computer readable media may be transitory or non-transitory. The one or more computer readable media could be, for example, an electronic, magnetic, optical, electromagnetic, infrared, or semiconductor system, or a propagation medium for data transmission, for example for downloading the code over the Internet. Alternatively, the one or more computer readable media could take the form of one or more physical computer readable media such as semiconductor or solid state memory, magnetic tape, a removable computer diskette, a random access memory (RAM), a read-only memory (ROM), a rigid magnetic disc, and an optical disk, such as a CD-ROM, CD-R/W or DVD.

In an implementation, the modules, components and other features described herein (for example, receiver module 120 or identifier module 130 in relation to Figure 2A) can be implemented as discrete components or integrated in the functionality of hardware components such as ASICS, FPGAs, DSPs or similar devices as part of an individualization server.

A "hardware component" is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase "hardware component" should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

Unless specifically stated otherwise, as apparent from the following discussion, it is appreciated that throughout the description, discussions utilizing terms such as "receiving", "determining", "comparing ", "identifying," or the like, refer to the actions and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

Further aspects and embodiments are disclosed in the following numbered items:

1. A method of identifying an original receiver of a media stream, wherein the media stream was transmitted by a content provider to the original receiver, the method comprising:

receiving a re-transmitted media stream, wherein the re-transmitted media stream is a re-transmission of the media stream;
detecting a set of content items embedded in the received media stream;
accessing information associating content items with original receivers of a media stream containing the set of content items; and
determining, using the information, an original receiver of the media stream comprising the detected set of content items.

2. The method of item 1, further comprising, prior to receiving the re-transmitted media stream:

splitting a group of receivers into target subgroups, wherein the group comprises the original receiver;
determining sets of content items, wherein the sets of content items are mutually different;
assigning a set of content items of the sets of content items to each target subgroup; and

transmitting, in respective media streams, each set of content items to the receivers in the target subgroup corresponding to the set of content items, or
transmitting the media stream and causing insertion of each set of content items in the media stream at the receivers in the target subgroup corresponding to the set of content items.

3. The method of any of items 1 or 2, further comprising, prior to receiving the re-transmitted media stream:

splitting a group of receivers into first subgroups, wherein the group comprises the original receiver and assigning a different content item to each first subgroup for transmission in a first time slot;
once or repeatedly splitting each previous subgroup into further subgroups until the further subgroups are the target subgroups and assigning a different content item to each further subgroup for transmission in a subsequent time slot; and
transmitting, in respective media streams, each set of content items to the receivers in the target subgroup corresponding to the set of content items, or

transmitting the media stream and causing insertion of each set of content items in the media stream at the receivers in the target subgroup corresponding to the set of content items.

4. The method of any of preceding item, wherein the number of receivers in each target subgroup is substantially equal across the target subgroups.

5. The method of any of preceding item, wherein the number of receivers in each target subgroup is one.

6. The method of any preceding item, wherein the sets of content items differ from each other with respect to the order of the content items in each set, and detecting comprises detecting the order of appearance of the content items.

7. The method of any preceding item, wherein each content item is of equal length, and wherein the media stream comprises predetermined time slots for the content items.

8. The method of any preceding item, wherein the media stream comprises an audio component, and wherein detecting a set of content items comprises detecting each content item in the set, and detecting a content item comprises comparing an audio fingerprint of the content item in the re-transmitted media stream with predetermined audio fingerprints associated with content items.

9. The method of any preceding item, wherein the media stream comprises a video component, and wherein detecting a set of content items comprises detecting each content item in the set, and detecting a content item comprises comparing a video fingerprint of the content item in the re-transmitted media stream with predetermined video fingerprints associated with content items.

10. The method of any preceding item, wherein detecting a set of content items comprises detecting each content item in the set, and detecting a content item comprises detecting an audio and/or video watermark in the media stream, and comparing the detected watermark with predetermined watermarks associated with content items.

11. The method of any preceding item, wherein accessing information associating content items with original receivers comprises accessing a database of content items each associated with a target audience of intended receivers.

12. The method of any preceding item, wherein accessing information associating content items with original receivers comprises accessing a database associating a set of content items associated with a subgroup of receivers.

13. The method of any of items 2 to 12, wherein causing insertion of each set of content items comprises transmitting metadata in the media stream indicating the set and locations or timeslots of content items to be inserted.

14. The method of any of items 2 to 13, wherein causing insertion of each set of content items comprises the receiver retrieving at least one content item in the set of content items from a memory of the receiver.

15. The method of any of item 2 to 14, wherein causing insertion of each set of content items comprises the receiver retrieving at least one content item in the set of content items from a remote source.

16. One or more non-transitory computer readable media having computer-executable instructions to cause one or more computer systems to perform the method of any of items 1 to 15.

17. A system for identifying an original receiver of a media stream, wherein the media stream was transmitted by a content provider to the original receiver, the system comprising:

> a receiver arranged to receive a re-transmitted media stream, wherein the re-transmitted media stream is a re-transmission of the media stream; and
> a processor arranged to:

>> detect a set of content items embedded in the received media stream;
>> access information associating content items with original receivers of a media stream containing the content items; and
>> determine, using the information, an original receiver of the media stream comprising the detected set of content items was transmitted.

18. The system of item 17, the processor further arranged to:

> split a group of receivers into target subgroups, wherein the group comprises the original receiver;

>> determine sets content items, wherein the sets of content items are mutually different; assign a set of content items of the sets of content items to each target subgroup; and transmit, in respective media streams, each set of content items to the receivers in the target subgroup corresponding to the set of content items, or
>> transmit the media stream and cause insertion of each set of content items in the media stream at the receivers in the target subgroup corresponding to the set of content items.

19. The system of any of items 17 or 18, the processor further arranged to:

> split a group of receivers into first subgroups, wherein the group comprises the original receiver and assigning a different content item to each first subgroup for transmission in a first time; once or repeatedly split each previous subgroup into further subgroups until the further subgroups are the target subgroups and assign a different content item to each further subgroup for transmission in a subsequent time; and transmit, in respective media streams, each set of content items to the receivers in the target subgroup corresponding to the set of content items, or
> transmit the media stream and cause insertion of each set of content items in the media stream at the receivers in the target subgroup corresponding to the set of content items.

20. The system of any of items 17 to 19, wherein the number of receivers in each target subgroup is substantially equal across the target subgroups.

21. The system of any of items 17 to 20, wherein the number of receivers in each target subgroup is one.

22. The system of any of items 17 to 21, wherein the sets of content items differ from each other with respect to the order of the content items in each set, and detecting comprises detecting the order of appearance of the content items.

23. The system of any of items 17 to 22, wherein each content item is one or more of: an advertisement; a movie trailer; a station identifier; a news flash; and a weather update

24. The system of any of items 17 to 23, wherein each content item is of equal length, and wherein the media stream comprises predetermined time slots for the content items.

25. The system of any of items 17 to 24, wherein the media stream comprises an audio component, and wherein the processor is arranged to detect a set of content items by detecting each content item in the set, and detecting a content item comprises comparing an audio fingerprint of the content item in the re-transmitted media stream with predetermined audio fingerprints associated with content items.

26. The system of any of items 17 to 25, wherein the media stream comprises a video component, and wherein the processor is arranged to detect a set of content items by detecting each content item in the set, and detecting a content item comprises comparing a video fingerprint of the content item in the re-transmitted media stream with predetermined video fingerprints associated with content items.

27. The system of any of items 17 to 26, wherein detecting a set of content items comprises detecting each content item in the set, and detecting a content item comprises detecting an audio and/or video watermark in the media stream, and comparing the detected watermark with predetermined watermarks associated with content items.

28. The system of any of items 17 to 27, wherein accessing information associating content items with original receivers comprises accessing a database of content items each associated with a target audience of intended receivers.

29. The system of any of items 17 to 28, wherein accessing information associating content items with original receivers comprises accessing a database associating a set of content items is with a subgroup of receivers.

30. The system of any of items 18 to 29, wherein the processor is arranged to cause insertion of each set of content items by transmitting metadata in the media stream indicating the set and locations, or timeslots, of content items to be inserted.

30. The system of any of items 18 to 29, wherein the processor is arranged to cause insertion of each set of content items by the receiver retrieving at least one content item in the set of content items from a memory of the receiver.

31. The system of any of items 18 to 30, wherein the processor is arranged to cause insertion of each set of content items by the receiver retrieving at least one content item in the set of content items from a remote source.

32. A method of assigning content items to media streams, the method comprising:

splitting a group of receivers into target subgroups, wherein the group comprises the original receiver;
determining sets content items, wherein the sets of content items are mutually different;
assigning a set of content items of the sets of content items to each target subgroup; and

transmitting, in respective media streams, each set of content items to the receiver in the target subgroup corresponding to the set of content items, or
transmitting the media stream and causing insertion of each set of content items in the media stream at the receivers in the target subgroup corresponding to the set of content items.

33. One or more non-transitory computer readable media having computer-executable instructions to cause one or more computer systems to perform the method of item 32.

34. A system for assigning content items to media streams, the system comprising a processor arranged to:

split a group of receivers into target subgroups, wherein the group comprises the original receiver;
determine sets content items, wherein the sets of content items are mutually different;
assign a set of content items of the sets of content items to each target subgroup; and
transmit, in respective media streams, each set of content items to the receiver in the target subgroup corresponding to the set of content items.

**Claims**

1. A method of identifying an original receiver of a media stream, wherein the media stream was transmitted by a content provider to the original receiver, the method comprising:

receiving a re-transmitted media stream, wherein the re-transmitted media stream is a re-transmission of the media stream;

detecting a set of content items embedded in the received media stream;

accessing information associating content items with original receivers of a media stream containing the set of content items; and

determining, using the information, an original receiver of the media stream comprising the detected set of content items.

2. The method according to 1, further comprising, prior to receiving the re-transmitted media stream:

splitting a group of receivers into target subgroups, wherein the group comprises the original receiver;

determining sets of content items, wherein the sets of content items are mutually different;

assigning a set of content items of the sets of content items to each target subgroup; and

transmitting, in respective media streams, each set of content items to the receivers in the target subgroup corresponding to the set of content items, or

transmitting the media stream and causing insertion of each set of content items in the media stream at the receivers in the target subgroup corresponding to the set of content items.

3. The method according to claim 1 or 2, further comprising, prior to receiving the re-transmitted media stream:

splitting a group of receivers into first subgroups, wherein the group comprises the original receiver and assigning a different content item to each first subgroup for transmission in a first time slot;

once or repeatedly splitting each previous subgroup into further subgroups until the further subgroups are the target subgroups and assigning a different content item to each further subgroup for transmission in a subsequent time slot; and

transmitting, in respective media streams, each set of content items to the receivers in the target subgroup corresponding to the set of content items, or

transmitting the media stream and causing insertion of each set of content items in the media stream at the receivers in the target subgroup corresponding to the set of content items.

4. The method according to any of the preceding claims, wherein the number of receivers in each target subgroup is substantially equal across the target subgroups.

5. The method according to any of the preceding claims, wherein the number of receivers in each target subgroup is one.

6. The method according to any of the preceding claims, wherein the sets of content items differ from each other with respect to the order of the content items in each set, and detecting comprises detecting the order of appearance of the content items.

7. The method according to any of the preceding claims, wherein each content item is of equal length, and wherein the media stream comprises predetermined time slots for the content items.

8. The method according to any of the preceding claims, wherein the media stream comprises an audio and/or video component, and wherein detecting a set of content items comprises detecting each content item in the set, and detecting a content item comprises comparing a fingerprint of the content item in the re-transmitted media stream with predetermined fingerprints associated with content items.

9. The method according to any of the preceding claims, wherein detecting a set of content items comprises detecting each content item in the set, and detecting a content item comprises detecting an audio and/or video watermark in the media stream, and comparing the detected watermark with predetermined watermarks associated with content items.

10. The method according to any of the preceding claims, wherein accessing information associating content items with original receivers comprises accessing a database of content items each associated with a target audience of intended receivers.

11. The method according to any of the preceding claims, wherein accessing information associating content items with original receivers comprises accessing a database associating a set of content items associated with a subgroup of receivers.

12. The method according to any of the claims 2 to 11, wherein causing insertion of each set of content items comprises transmitting metadata in the media stream indicating the set and locations or timeslots of content items to be inserted.

13. The method according to of any of the claims 2 to 12, wherein causing insertion of each set of content items comprises the receiver retrieving at least one content item in the set of content items from a remote source.

**14.** A system for identifying an original receiver of a media stream, wherein the media stream was transmitted by a content provider to the original receiver, the system comprising:

a receiver arranged to receive a re-transmitted media stream, wherein the re-transmitted media stream is a re-transmission of the media stream; and
a processor arranged to:

detect a set of content items embedded in the received media stream;
access information associating content items with original receivers of

a media stream containing the content items; and
determine, using the information, an original receiver of the media stream comprising the detected set of content items was transmitted.

**15.** A method of assigning content items to media streams, the method comprising:

splitting a group of receivers into target subgroups, wherein the group comprises the original receiver;
determining sets content items, wherein the sets of content items are mutually different;
assigning a set of content items of the sets of content items to each target subgroup; and
transmitting, in respective media streams, each set of content items to the receiver in the target subgroup corresponding to the set of content items, or
transmitting the media stream and causing insertion of each set of content items in the media stream at the receivers in the target subgroup corresponding to the set of content items.

*FIG. 1A*

*FIG. 1B*

FIG. 2A

150

| Content item | Target audience | Acoustic fingerprint | Video fingerprint |
|---|---|---|---|
| Ad1 | | | |
| Trailer1 | | | |
| Ad2 | | | |
| Ident1 | | | |

152    154    156

*FIG. 2B*

150

| 162 | 164 | 166 | 168 |
| --- | --- | --- | --- |
| **Subgroup** | **Set of content items** | **Set fingerprints** | **Receivers** |
| 1 | {Ident2; Ad1; Trailer3} | | |
| 2 | {Ident1; Ad2; Ad1} | | |
| 3 | {Ad1; Trailer4; Ident2} | | |
| n | ... | | |

*FIG. 2C*

```
┌─────────────────────────────────────────────────────────────┐
│          Receive re-transmitted media stream                 │──202
└─────────────────────────────────────────────────────────────┘
                              │
                              ▼
┌─────────────────────────────────────────────────────────────┐
│      Detect content items in re-transmitted media stream     │──204
└─────────────────────────────────────────────────────────────┘
                              │
                              ▼
┌─────────────────────────────────────────────────────────────┐
│  Access information associating content items with original recipients │──206
└─────────────────────────────────────────────────────────────┘
                              │
                              ▼
┌─────────────────────────────────────────────────────────────┐
│      Determining original receiver(s) of the media stream    │──208
└─────────────────────────────────────────────────────────────┘
                              │
                              ▼
                     ╱─────────────────╲
              No   ╱   Number of identified ╲  ──210
         ◄────────    receiver(s) below
                     predetermined size?
                     ╲─────────────────╱
                              │
                            Yes │
                              ▼
                        ┌──────────┐
                        │   End    │
                        └──────────┘
```

*FIG. 3*

FIG. 4

| | |
|---|---|
| Split group of recipients | 402 |
| Determine sets of content items | 404 |
| Assign sets of content items | 406 |
| Cause insertion of content items and transmit media stream | 408 |

FIG. 5

```
                    ┌─────────────────────────────┐
                    │ Determine number of time slots │──450
                    └─────────────────────────────┘
                                   │
                                   ▼
          ┌──────────────▶┌─────────────────────────────┐
          │               │    Split group of recipients   │──452
          │               └─────────────────────────────┘
          │                              │
          │                              ▼
          │               ┌─────────────────────────────┐
          │               │     Determine content item     │──454
          │               └─────────────────────────────┘
          │                              │
          │         ┌462                 ▼
          │         │    ┌─────────────────────────────┐
  ┌─────────────────┴──┐ │       Assign content item      │──456
  │  Select next time slot│ └─────────────────────────────┘
  └────────────────────┘                │
          ▲                              ▼
          │               ┌─────────────────────────────┐
          │               │ Cause insertion of content item and │──458
          │               │      transmit media stream      │
          │               └─────────────────────────────┘
          │                              │
          │                              ▼
          │                     ╱──────────────╲        ┌460
          │      No            ╱ All time slots filled ╲
          └───────────────────▕   with content items?   ▏
                               ╲                        ╱
                                ╲──────────────────────╱
                                          │
                                          │ Yes
                                          ▼
                                   ╭────────────╮
                                   │    End     │
                                   ╰────────────╯
```

*FIG. 6*

*FIG. 7*

EP 3 264 777 A1

FIG. 7
(continued)

*FIG. 8*

EP 3 264 777 A1

Europäisches
Patentamt

European
Patent Office

Office européen
des brevets

**EUROPEAN SEARCH REPORT**

Application Number

EP 16 17 7528

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/043081 A1 (KIAYIAS AGGELOS [US] ET AL) 18 February 2010 (2010-02-18)<br>* abstract *<br>* figures 1,3,5,6 *<br>* paragraphs [0010] - [0014], [0017], [0019], [0021] - [0022], [0024] - [0025], [0027] - [0028], [0031] - [0032], [0037] - [0038], [0048] - [0057], [0063] *<br>* paragraphs [0067] - [0068], [0073] - [0080], [0084], [0087] *<br>* claims 1-3,5-6,9-10,12-13,18-19 *<br>----- | 1-11,14, 15 | INV.<br>H04N21/254<br>H04N21/44<br>H04N21/442<br>H04N21/8358<br>H04N21/845 |
| X | WO 2007/110806 A2 (KONINKL PHILIPS ELECTRONICS NV [NL]; MAANDONKS ARNOLDUS J L M [NL]; HA) 4 October 2007 (2007-10-04)<br>* abstract *<br>* page 1, paragraph 5 *<br>* page 2, paragraphs 1,2,4,5 *<br>* page 4 - page 7 *<br>* claims 1,3,6,9 *<br>* figure 2 *<br>----- | 1-5, 9-11, 13-15 | |
| X | US 2007/283448 A1 (GREEN STUART [GB]) 6 December 2007 (2007-12-06)<br>* abstract *<br>* figures 3-7,9-11 *<br>* paragraphs [0010] - [0011], [0013], [0036], [0043], [0046], [0048], [0050] - [0054], [0056] - [0057], [0060] - [0063], [0069], [0071], [0074], [0086] *<br>-----<br>-/-- | 1,6,7,9, 10,12,14 | TECHNICAL FIELDS SEARCHED (IPC)<br>H04L<br>G06F<br>H04N |

The present search report has been drawn up for all claims

| Place of search | Date of completion of the search | Examiner |
|---|---|---|
| The Hague | 4 November 2016 | Beaudet, J |

Europäisches
Patentamt

European
Patent Office

Office européen
des brevets

# EUROPEAN SEARCH REPORT

Application Number

EP 16 17 7528

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PETER ROELSE: "Dynamic subtree tracing and its application in pay-TV systems", INTERNATIONAL JOURNAL OF INFORMATION SECURITY, vol. 10, no. 3, 1 June 2011 (2011-06-01), pages 173-187, XP055001384, ISSN: 1615-5262, DOI: 10.1007/s10207-011-0126-5 * abstract * * page 174, column 1 * * page 175, column 2 * ----- | 1,6-10, 14 | |
| A | US 2009/199305 A1 (MICHIELS WILHELMUS PETRUS ADRI [NL] ET AL) 6 August 2009 (2009-08-06) * abstract * * figure 1 * * paragraphs [0004], [0006] - [0010], [0012], [0014], [0033], [0043] - [0049], [0051], [0053] - [0055] * ----- | 1-15 | |

TECHNICAL FIELDS
SEARCHED      (IPC)

The present search report has been drawn up for all claims

| Place of search | Date of completion of the search | Examiner |
|---|---|---|
| The Hague | 4 November 2016 | Beaudet, J |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

                                             
& : member of the same patent family, corresponding
    document

EPO FORM 1503 03.82 (P04C01)

page 2 of 2

## ANNEX TO THE EUROPEAN SEARCH REPORT
## ON EUROPEAN PATENT APPLICATION NO.

EP 16 17 7528

This annex lists the patent family members relating to the patent documents cited in the above-mentioned European search report.
The members are as contained in the European Patent Office EDP file on
The European Patent Office is in no way liable for these particulars which are merely given for the purpose of information.

04-11-2016

| Patent document cited in search report | | Publication date | Patent family member(s) | | Publication date |
|---|---|---|---|---|---|
| US 2010043081 | A1 | 18-02-2010 | US 2010043081 A1 | | 18-02-2010 |
| | | | WO 2010021774 A1 | | 25-02-2010 |
| WO 2007110806 | A2 | 04-10-2007 | CN 101410845 A | | 15-04-2009 |
| | | | EP 2002374 A2 | | 17-12-2008 |
| | | | JP 2009530949 A | | 27-08-2009 |
| | | | RU 2008142107 A | | 27-04-2010 |
| | | | US 2010225826 A1 | | 09-09-2010 |
| | | | WO 2007110806 A2 | | 04-10-2007 |
| US 2007283448 | A1 | 06-12-2007 | GB 2419249 A | | 19-04-2006 |
| | | | US 2007283448 A1 | | 06-12-2007 |
| | | | WO 2006040583 A1 | | 20-04-2006 |
| US 2009199305 | A1 | 06-08-2009 | AT 456102 T | | 15-02-2010 |
| | | | CN 101506817 A | | 12-08-2009 |
| | | | EP 2057575 A2 | | 13-05-2009 |
| | | | JP 5185271 B2 | | 17-04-2013 |
| | | | JP 2010501923 A | | 21-01-2010 |
| | | | US 2009199305 A1 | | 06-08-2009 |
| | | | WO 2008023307 A2 | | 28-02-2008 |

EPO FORM P0459

For more details about this annex : see Official Journal of the European Patent Office, No. 12/82